# EUROPÄISCHE PATENTSCHRIFT

(11) **EP 3 742 021 B1**
(45) Veröffentlichungstag und Bekanntmachung des Hinweises auf die Patenterteilung: **21.02.2024**
(21) Anmeldenummer: 19175881.2
(22) Anmeldetag: 22.05.2019
(51) Int. Cl.: F16G 15/04

(54) **VERKÜRZUNGSKLAUE ZUM SPANNEN EINER ZURRKETTE**
SHORTENING CLUTCH FOR TENSIONING A LASHING CHAIN
GRIFFE DE RACCOURCISSEMENT PERMETTANT DE SERRER UNE CHAÎNE D'AMARRAGE

(43) Veröffentlichungstag der Anmeldung: 25.11.2020
(73) Patentinhaber: pewag austria GmbH, 8041 Graz (AT)
(72) Erfinder: Oswald, Bernhard, 8605 Kapfenberg (AT)
(74) Vertreter: Patentanwaltskanzlei Matschnig & Forsthuber OG

(56) Entgegenhaltungen:
- DE-A1- 2 712 605
- DE-B3- 10 222 818
- US-A- 2 978 766

## Beschreibung

Die Erfindung bezieht sich auf eine Verkürzungsklaue für eine Zurrkette mit einem Aufnahmeteil und einem Halteteil, welcher Kettenglieder gegen ungewolltes Lösen von Kettengliedern eines Kettenstranges der Zurrkette aus dem Aufnahmeteil sichert.

Aus dem Dokument EP 3395743 A1 der Anmelderin geht eine Verkürzungsklaue hervor, die den Vorteil besitzt, dass sie - im Gegensatz zu einer Anzahl anderer Sicherungsklauen - auch mit einer Hand bedient werden kann, jedoch einen Aufbau besitzt, der bei sehr tiefen Temperaturen unter bestimmten Witterungsbedingungen auch vereisungsanfällig ist. Aus der DE 102 22 818 B3 ist ebenfalls eine Gattungsgemäße Verkürzungsklaue bekannt.

Eine Aufgabe der Erfindung liegt in der Schaffung einer Verkürzungsklaue für Zurrketten, die einen einfachen Aufbau besitzt und bei gleicher Festigkeit leichter ausgeführt werden kann, als vergleichbare Sicherungsklauen nach dem Stand der Technik.

Diese Aufgabe wird mit einer Verkürzungsklaue der eingangs genannten Art gelöst, bei welcher erfindungsgemäß der Aufnahmeteil gabelförmig ausgebildet ist und der Halteteil zwischen einer Schließstellung und einer Offenstellung bezüglich des Aufnahmeteils verschwenkbar an dem Aufnahmeteil gelagert ist, in der Verkürzungsklaue ein erstes Kettenglied des Kettenstranges bei geschlossener Verkürzungsklaue liegt, wobei für ein zweites, an das erste Kettenglied anschließende Kettenglied eine Gliedtasche zum Halten dieses zweiten Kettengliedes in Schließstellung der Verkürzungsklaue ausgebildet ist, und ein an das zweite Kettenglied anschließendes drittes Kettenglied bei geschlossener Verkürzungsklaue in einer schlitzförmigen Öffnung des Halteteils aufgenommen ist, wobei bei in seine Offenstellung verschwenktem Halteteil der Kettenstrang freigegeben ist und bei in seine Schließstellung verschwenktem Halteteil der Kettenstrang in der Verkürzungsklaue fixiert ist.

Dank der Erfindung erhält man eine Verkürzungsklaue, die wenige Einzelteile besitzt und nicht zuletzt aus diesem Grund eine kostengünstige Herstellung erlaubt und geringes Gewicht aufweist.

Es kann mit Vorteil vorgesehen sein, wenn das erste Kettenglied des Kettenstranges bei geschlossener Verkürzungsklaue an einer dieses erste Kettenglied abstützenden Abstützfläche des Aufnahmeteils anliegt.

Bei einer zweckmäßigen Variante ist vorgesehen, dass bei in seine Schließstellung verschwenktem Halteteil das erste Kettenglied zwischen Abstützfläche des Aufnahmeteils und einem Ende des Halteteils gelegen ist.

Es ist weiters zweckmäßig, wenn die das erste Kettenglied abstützende Abstützfläche am Boden einer schlitzförmigen Vertiefung des Aufnahmeteils liegt, da sich hierdurch eine zusätzliche Abstützung für das erste Kettenglied ergibt.

Es kann weiters von Vorteil sein, wenn an die schlitzförmige Öffnung eine Durchführöffnung für den Kettenstrang anschließt.

Eine andere günstige Variante sieht vor, dass die schlitzförmige Öffnung einseitig offen ist, um ein Entfernen des in ihr aufgenommenen dritten Kettengliedes bei Offenstellung des verschwenkbar gelagerten Halteteils zu ermöglichen.

Es ist weiters zweckmäßig, wenn die Breite der schlitzförmigen Öffnung entsprechend der Nenndicke der Kettenglieder so bemessen ist, dass das dritte Kettenglied mit Spiel aufgenommen wird.

Bei einer für die Verschwenkbarkeit der beiden Teile der Verkürzungsklaue günstigen Lösung ist vorgesehen, dass an dem Halteteil zwei Drehzapfen ausgeformt sind, welchen in dem Aufnahmeteil Lagerausnehmungen zu ihrer Aufnahme zugeordnet sind.

Für einen bevorzugten Anwendungsfall kann vorgesehen sein, dass der Aufnahmeteil einstückig mit einer Schraubspindel eines Ratschenspanners ausgebildet ist.

Andererseits ist es bei anderen Anwendungen auch möglich und vorteilhaft, wenn der Aufnahmeteil zum Anschließen eines Kettenabschnittes als Anschlussteil eine Aufnahmegabel mit einem Anschlussbolzen besitzt.

Eine sehr vorteilhafte Ausbildung der Erfindung zeichnet sich dadurch aus, dass an das erste Kettenglied in Richtung der Schraubspindel zwei weitere Kettenglieder anschließen, wobei das letzte Kettenglied mit Hilfe eines in eine Bohrung einsetzbaren Bolzens in dem Aufnahmeteil gehalten ist.

Die Erfindung umfasst auch einen Ratschenspanner, bei welchem an zumindest einer seiner beiden Seiten eine Verkürzungsklaue in einer der erfindungsgemäßen Ausführungen vorgesehen ist.

Die Erfindung samt weiteren Vorteilen ist im Folgenden an Hand beispielsweiser Ausführungsformen näher erläutert, die in der Zeichnung veranschaulicht sind. In dieser zeigen
Fig. 1 in schaubildlicher Darstellung eine Zurrkette mit einem Ratschenspanners und einer erfindungsgemäßen Verkürzungsklaue, die bei einer ersten Ausführungsform an jedem Ende einer Schraubspindel des Ratschenspanners sitzt,
Fig. 2 in vergrößerter Darstellung die Verkürzungsklaue der Fig. 1 in geschlossenem Zustand mit in ihr gesicherten Kettengliedern eines Abschnitts der Zurrkette,
Fig. 3 als ersten Teil der Verkürzungsklaue einen gabelförmigen Aufnahmeteil, gleichfalls in schaubildlicher Darstellung, bei welchem in dieser Ausführung der Anschlussteil als Schraubspindel des Ratschenspanners ausgebildet ist,
Fig. 4 als zweiten Teil der Verkürzungsklaue einen bezüglich des Aufnahmeteils schwenkbaren und sicherbaren Halteteil mit einer Gliedtasche, in welcher ein Kettenglied strichliert angedeutet, aufgenommen ist,
Fig. 5 in schaubildlicher Darstellung die Verkürzungsklaue der Fig. 2 in geöffnetem Zustand mit einem noch nicht gesicherten Abschnitt der Zurrkette,
Fig. 6 eine in der Symmetrieebene geschnittene Seitenansicht der Verkürzungsklaue in geöffnetem Zustand mit einem noch nicht gesicherten Abschnitt der Zurrkette,
Fig. 7 in einer Ansicht wie Fig. 6 die Verkürzungsklaue in geschlossenem Zustand mit dem nunmehr gesicherten Abschnitt der Zurrkette,
Fig. 8 eine Ansicht des Halteteils in Richtung des Pfeiles VIII der Fig. 5,
Fig. 9 eine Ansicht des Halteteils entsprechend Fig. 8, jedoch einer zweiten Ausführungsform der Erfindung,
Fig. 10 eine Verkürzungsklaue der zweiten Ausführungsform in einer Ansicht entsprechend Fig. 5 in geöffnetem Zustand mit einem noch nicht gesicherten Abschnitt der Zurrkette,
Fig. 11 die Verkürzungsklaue der zweiten Ausführungsform in geschlossenem Zustand in einer Ansicht entsprechend der Fig. 2,
Fig. 12 in einer Ansicht analog zu Fig. 2 eine dritte Ausführungsform einer erfindungsgemäße Verkürzungsklaue, bei welcher der Aufnahmeteil zum Anschließen einer Kette als Anschlussteil eine Aufnahmegabel mit einem Anschlussbolzen besitzt, und
Fig. 13 eine vierte Ausführungsform der Erfindung, welche von der zweiten Ausführungsform ausgeht.

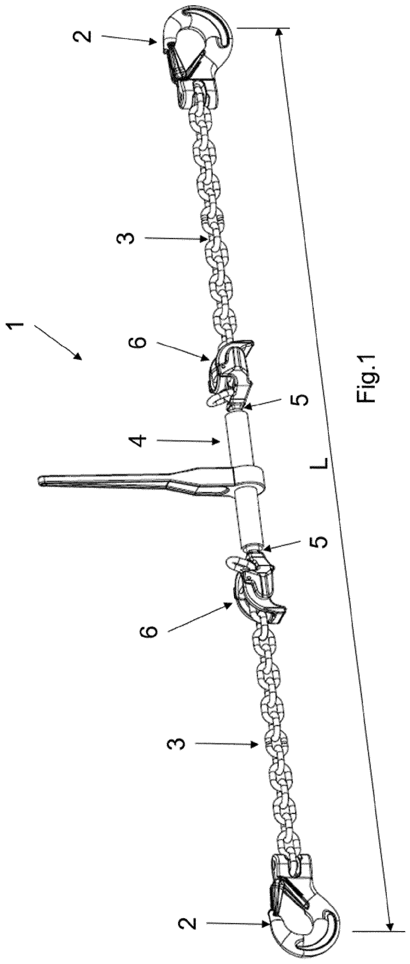

**Fig. 1** zeigt ein Ausführungsbeispiel einer Zurrkette **1,** die beispielsweise zum Sichern von schweren Lasten auf Tiefladern verwendet wird, wobei selbstverständlich auch viele andere Anwendungen in Frage kommen, bei welchen Lasten oder Gegenstände gegen Verrutschen gesichert werden müssen.

Die Zurrkette 1, die im gezeigten Beispiel auf eine Länge **L** eingestellt ist besitzt an beiden Enden eine Einhänge- oder Kuppelvorrichtung, hier Kuppelhaken **2,** und weist zwei Kettenstränge **3** auf, die miteinander über einen bekannten Ratschenspanner **4** mit dessen zwei Schraubspindeln **5** verbunden sind. An beiden Enden des Ratschenspanners 4 sitzt an dem äußeren Ende der Schraubspindeln 5 je eine erfindungsgemäße Verkürzungsklaue **6,** in welchen je ein Ende der Kettenstränge 3 gehalten ist. Im gezeigten Beispiel ist die verwendete Kette eine Rundgliederkette, deren Glieder gegeneinander um 90° verdreht sind.

Zum Festzurren einer Last wird nach Fixieren der beiden Enden der Zurrkette, z.B. durch Einhängen der Kuppelhaken 2 an entsprechenden Stellen beispielsweise eines LKWs oder Tiefladers, die Kette durch Fixieren der Kettenstränge 3 in der Verkürzungsklaue 6 so weit wie möglich vorgespannt und darnach erfolgt das endgültige Spannen mit Hilfe des Ratschenspanners 4. Das Vorspannen unter Verwendung der Verkürzungsklauen 6 ist in den meisten Fällen erforderlich, da der Ratschenspanner 4 lediglich eine geringe Längenvariation in der Größenordnung von 140 bis 300 mm gestattet.

Wenngleich in Fig. 1 zwei Verkürzungsklauen 6 gezeigt sind, sollte es klar sein, dass in vielen Fällen die Verwendung einer einzigen Verkürzungsklaue hinreichend zur gewünschten Verkürzung der Gesamtlänge der Zurrkette sein wird.

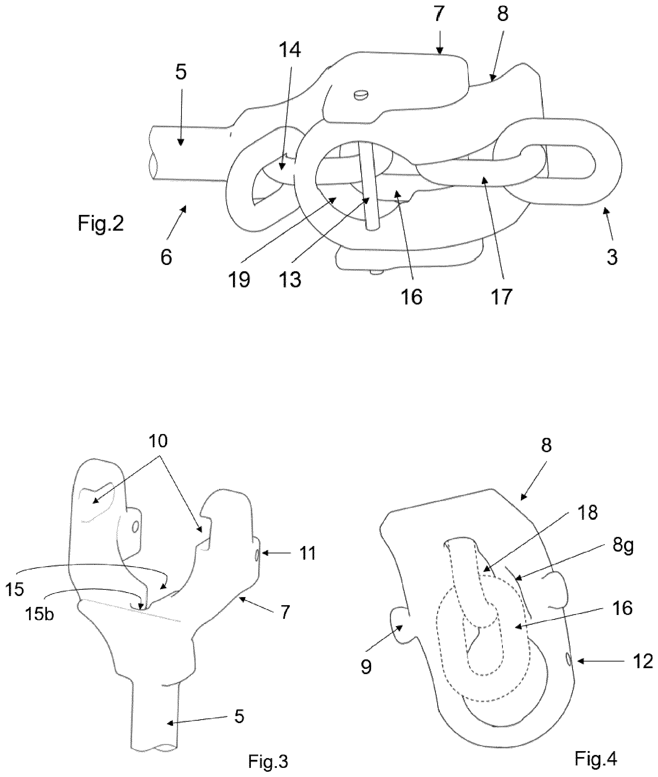

Im Folgenden wird unter Bezugnahme auf die gegenüber Fig. 1 vergrößerten Darstellungen einer erfindungsgemäßen Verkürzungsklaue 6 der **Fig. 2 bis 7** eine erste Ausführungsform der Erfindung detailliert beschrieben.

Die Verkürzungsklaue 6 besitzt einen gabelförmigen Aufnahmeteil 7 und einen bezüglich dieses Aufnahmeteils zwischen einer Schließstellung und einer Offenstellung verschwenkbar gelagerten Halteteil 8 zur Aufnahme und Sicherung von Kettengliedern eines Kettenstranges 3 der Zurrkette 1.

Der Aufnahmeteil 7 ist in Alleinstellung in Fig. 3 schaubildlich dargestellt, der Halteteil 8 ist für sich in Fig. 4 gezeigt.

Um eine schwenkbare Lagerung der beiden Teile, nämlich des Aufnahmeteils 7 und des Halteteils 8 gegeneinander zu ermöglichen, sind an dem Halteteil 8 zwei Drehzapfen **9** ausgeformt, welchen in dem Aufnahmeteil 7 Lagerausnehmungen **10** zu ihrer Aufnahme zugeordnet sind. Die Drehzapfen 9 bzw. die Lagerausnehmungen 10 definieren eine Schwenkachse s der gegenseitigen Verschwenkung des Aufnahmeteils 7 und des Halteteils 8. Bei der gezeigten Ausführungsform sind die beiden Drehzapfen 9 mit dem Halteteil 8 einstückig ausgeführt, doch sollte klar sein, dass dies nur eine von vielen Möglichkeiten ist, welche dem Fachmann zur Verfügung stehen, um ein Verschwenken der beiden Teile der Verkürzungsklaue 6 zu realisieren. So kann man auch einschraubbare Drehzapfen vorsehen und die Lagerausnehmungen können als Bohrungen ausgeführt werden.

Ein Bohrungen **11** bzw. **12** des Aufnahmeteils 7 bzw. des Halteteils 8 durchsetzender Sicherungsstift **13** kann im geschlossenen Zustand der Verkürzungsklaue 6 eingesetzt werden, um ein ungewolltes Öffnen der Verkürzungsklaue 6 zu verhindern. Es sollte allerdings für den Fachmann klar sein, dass eine Sicherung gegen Öffnen auch auf andere Weise erfolgen kann. Außerdem ist es möglich, die Schwenkachse s kinematisch so zu positionieren, dass bei einer Zuglast an dem Kettenstrang 3 der Aufnahmeteil 7 und der Halteteil 8 in ihre Schließstellung gedrängt werden.

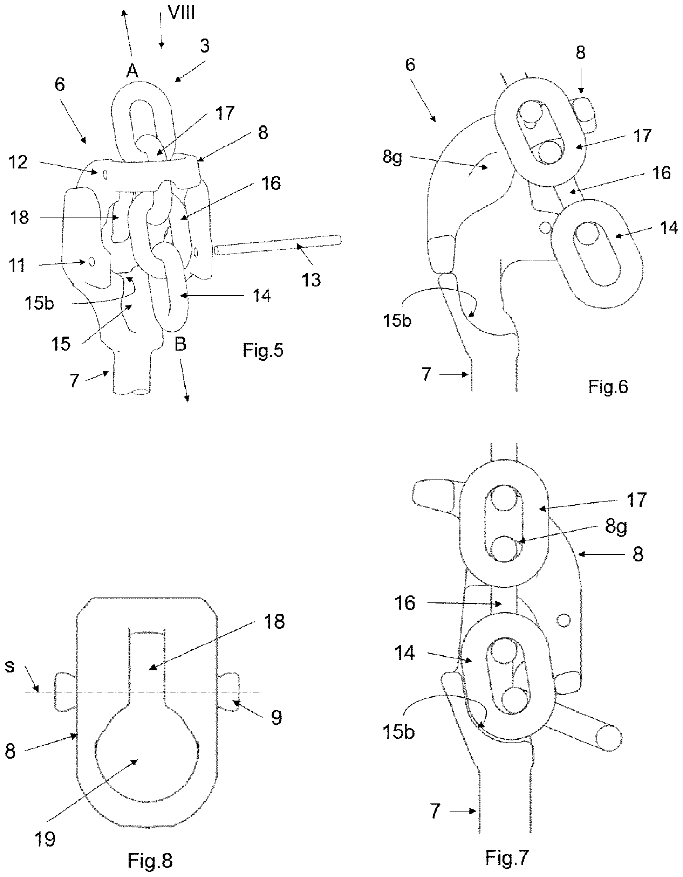

In den Figuren sind in der Verkürzungsklaue 6 im Wesentlichen drei Kettenglieder des Kettenstranges aufgenommen, nämlich ein erstes Kettenglied **14,** welches bei geschlossener Verkürzungsklaue 6 an einer dieses erste Kettenglied abstützenden Abstützfläche **15b** anliegt, welche den Boden einer schlitzförmigen Vertiefung **15** in dem Aufnahmeteil 7 bildet, ein zweites Kettenglied **16,** welches an das erste Kettenglied 14 anschließt und gegen dieses um 90° verdreht ist, sowie ein drittes Kettenglied **17,** welches bei geschlossener Verkürzungsklaue 6, somit in deren Schließstellung (Fig. 2 und 7) in einer schlitzförmigen Öffnung **18** des Halteteils 8 gehalten ist.

An die schlitzförmige Öffnung 18 schließt bei diesem Ausführungsbeispiel eine Durchführöffnung **19** für den Kettenstrang 3 an.

Die Breite der schlitzförmigen Öffnung 18 in dem Halteteil 8 ist entsprechend der Nenndicke der Kettenglieder so bemessen, dass das dritte Kettenglied 17 mit Spiel aufgenommen wird, womit gemeint ist, dass zwar einerseits ein leichtes Einsetzten des Kettengliedes möglich sein soll, aber andererseits ein sicherer Sitz für dieses gegeben sein soll.

In Halteteil 8 ist weiters eine Gliedtasche **8g** ausgebildet, welche dazu dient, einen Abschnitt des zweiten Kettengliedes 16 in Schließstellung der Verkürzungsklaue 6 aufzunehmen und das zweite Kettenglied 16 zu halten. Man kann diese Gliedtasche 8g am besten in den Fig. 4, 6und 7 erkennen.

Zur groben Längenänderung der Zurrkette 1 wird der Halteteil 8 aufgeklappt, wobei eine solche Offenstellung der Verkürzungsklaue 6 aus den Fig. 5, 6 und 10 ersichtlich ist. In dieser Offenstellung kann der Kettenstrang 3 in Richtung der Pfeile **A** und **B** (Fig. 5) frei durch die Durchführöffnung 19 gezogen werden. Ist eine gewünschte Position des Kettenstranges bezüglich der Verkürzungsklaue 6 erreicht, wird der Halteteil 8 in seine Schließstellung geklappt, bis er die in den Fig. 2 und 7 gezeigte Position erreicht hat, in welcher die Bohrungen 11 und 12 für den Sicherungsstift 13 fluchten, der sodann eingesetzt werden kann. Der Sicherungsstift 13 verhindert auch, dass der Kettenstrang 3 aus der Öffnung 18 bzw. der Durchführöffnung 19 herausgleiten kann.

Demnach ist bei in seine Offenstellung verschwenktem Halteteil 8 der Kettenstrang 3 freigegeben und bei in seine Schließstellung verschwenktem Halteteil 8 der Kettenstrang 3 in der Verkürzungsklaue 6 fixiert. Man kann beispielsweise aus Fig. 7 erkennen, dass bei in seine Schließstellung verschwenktem Halteteil 8 bei der gezeigten Ausführungsform das erste Kettenglied 14 zwischen Abstützfläche 15b des Aufnahmeteils 7 und einem Ende des Halteteils 8 gelegen ist. Bei allen Ausführungsformen ist die Fixierung des Kettenstranges 3 jedoch dadurch gegeben, dass das zweite Kettenglied 16 in Schließstellung der Verkürzungsklaue 6 in der Gliedtasche 8g aufgenommen und gehalten ist.

An den beschriebenen Verkürzungsvorgang anschließend kann nun ein weiters Verkürzen bzw. Spannen der Zurrkette 1 in bekannter Weise mittels des Ratschenspanners 4 durchgeführt werden.

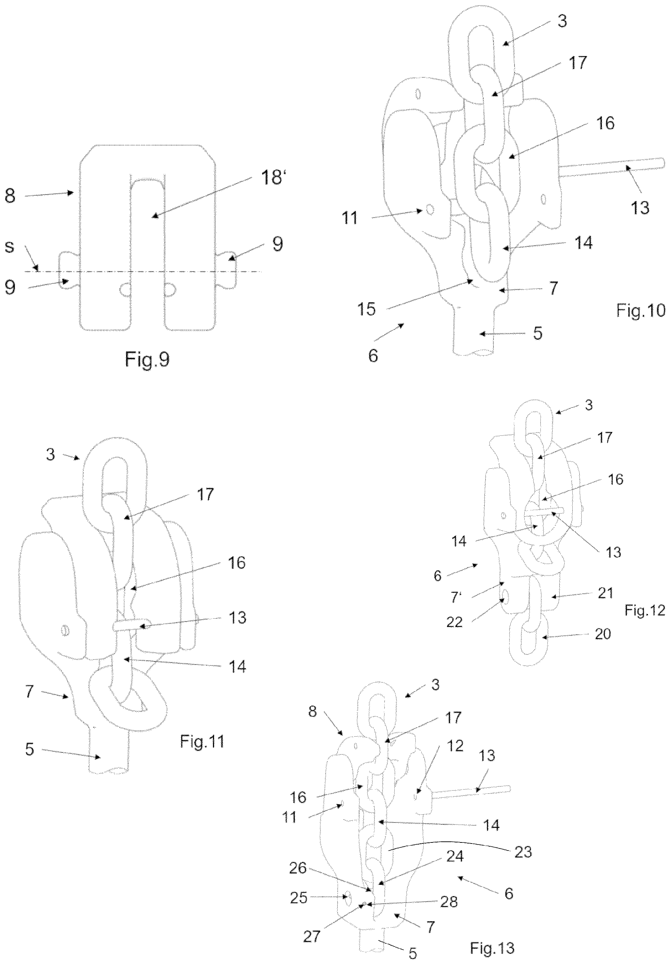

Unter Bezugnahme auf die **Fig. 9 bis 11** wird eine zweite Ausführungsform der Erfindung kurz beschrieben, wobei für gleiche oder gleiche Teile die bisher verwendeten Bezugszeichen gelten.

Der wesentliche Unterschied zu der vorgehend beschriebenen Ausführung liegt darin, dass bei der zweiten Ausführungsform die schlitzförmigen Öffnung **18'** in dem Halteteil 8 einseitig offen ist, um ein Entfernen des in ihm aufgenommenen dritten Kettengliedes 17 bei Offenstellung des um die Achse s verschwenkbar gelagerten Halteteils 8 zu ermöglichen. In der in Fig. 10 gezeigten Offenstellung kann der Kettenstrang 3 einfach nach vorne entnommen werden, d.h. er muss nicht durch eine Durchführöffnung 19 gezogen werden, wie dies für die erste Ausführungsform gilt. Fig. 11 zeigt die zweite Ausführungsform der Verkürzungsklaue 6 in geschlossenem Zustand - analog zu Fig. 2, wobei man erkennen kann, dass das erste Kettenglied 14 auch durch den Sicherungsstift 13 in seiner Lage gehalten ist.

Bei einem Verkürzen der Zurrkette 1 in Zusammenhang mit der Verwendung eines Ratschenspanners 4, bleiben die Verkürzungsklaue 6 und die Kettenstränge 3 im Wesentlichen auf einer gemeinsamen Achse, wodurch die Kette maximal vorgespannt werden kann. Demgegenüber müssen bei anderen bekannten Ausführungen entweder die Kette oder die Verkürzungsklaue von der gemeinsamen Achse wegbewegt/ausgelenkt werden, um eine Verbindung herzustellen. Entgegen beispielsweise der eingangs genannten Verkürzungseinrichtung, bei welcher die Kette durch eine Verriegelung in einem Kreuzschlitz freigegeben bzw. verriegelt wird, schwenkt bei der Erfindung der Halteteil 8 zwischen einer Halteposition und einer Freigabeposition, und die Verkürzungsklaue 6 liegt dabei immer auf der gemeinsamen Achse von Kette, Verkürzungsklaue und Ratschenspanner.

Bei der erfindungsgemäßen Verkürzungsklaue kann die Kette in der Freigabeposition des Halteteiles relativ zu diesem gedreht werden, was bei der erwähnten bekannten Verkürzungseinrichtung aufgrund des dort vorhandenen Kreuzschlitzes nicht möglich ist. Die Erfindung ermöglicht demgegenüber, dass jedes Kettenglied in die schlitzförmige Öffnung des Halteteiles eingeführt werden kann, wodurch ein gliedgenaues Verkürzen möglich ist, wogegen nach dem beschriebenen Stand der Technik nur um jedes zweite Glied verkürzt werden kann.

Bei der ersten, der zweiten und einer weiter unten beschriebenen vierten Ausführungsform der erfindungsgemäßen Verkürzungsklaue 6 geht der Aufnahmeteil 7 einstückig in eine Schraubspindel 5 des Ratschenspanners 4 über. Um den Einsatzbereich der erfindungsgemäßen Verkürzungsklaue zu erweitern, sind natürlich auch andere Lösungen möglich, von welchen lediglich als Beispiel eine in Fig. **12** gezeigt ist. Diese zeigt in einer Ansicht analog zu Fig. 2 eine dritte Ausführungsform einer erfindungsgemäßen Verkürzungsklaue, bei welcher der Aufnahmeteil 7' zum Anschließen eines Kettenabschnittes **20** als Anschlussteil eine Aufnahmegabel **21** mit einem Anschlussbolzen **22** besitzt. Eine solche Anschlussmöglichkeit zeigt beispielsweise die Verkürzungsvorrichtung der eingangs genannten EP 3395743 A1 der Anmelderin.

Eine vierte Ausführungsform in Abwandlung der zweiten Ausführungsform wird nun an Hand der **Fig. 13** erläutert. Die hier in ihrer Offenstellung dargestellte Verkürzungsklaue 6 entspricht weitgehend jener der in den Fig. 9 bis 11 dargestellten Verkürzungsklaue, was am besten durch einen Vergleich mit Fig. 10 ersichtlich ist, jedoch schließen hier an das erste Kettenglied 14 in Richtung der Schraubspindel 5 zwei weitere Kettenglieder **23, 24** an, wobei das letzte Kettenglied 24 mit Hilfe eines in eine Bohrung **25** einsetzbaren Bolzens **26** in dem Aufnahmeteil 7 gehalten ist. Für den Bolzen 26 kann ein Sicherungsstift **27** vorgesehen sein, der in eine Bohrung **28** eingesetzt werden kann.

Fig. 13 zeigt den unverkürzten Zustand des Kettenstranges 3. Zum Verkürzen des Kettenstranges 3 wird der Halteteil 8 in die hier gezeigte Offenstellung der Verkürzungsklaue 6 gebracht und es werden andere Glieder des Stranges an die Stelle der hier gezeigten zweiten und dritten Kettenglieder 16 und 17 eingesetzt und sodann wird der Halteteil 8 in seine Schließstellung verschwenkt, in welcher er mit Hilfe des Sicherungsstiftes 13 blockiert werden kann.

Die vierte Ausführungsform bietet insbesondere in Verbindung mit einem Ratschenspanner 4 den Vorteil, dass die Kettenstränge 3 fest mit dem Ratschenspanner 4 verbunden bleiben und somit nicht verloren gehen können. Auch eine Kennzeichnung, die vor allem aus Sicherheitsbestimmungen gefordert wird, wird einfacher, da nur noch eine Kennzeichnung erforderlich ist und nicht mehr drei Kennzeichnungen für voneinander getrennte Einzelteile der Zurrkette 1.

### Liste der Bezugszeichen

- 1: Zurrkette
- 2: Kuppelhaken
- 3: Kettenstränge
- 4: Ratschenspanner
- 5: Schraubspindel
- 6: Verkürzungsklaue
- 7: Aufnahmeteil
- 7': Aufnahmeteil
- 8: Halteteil
- 8g: Gliedtasche
- 9: Drehzapfen
- 10: Lagerausnehmungen
- 11: Bohrung
- 12: Bohrung
- 13: Sicherungsstift
- 14: Kettenglied, erstes
- 15: schlitzförmige Vertiefung in 7
- 15b: Abstützfläche für 14
- 16: Kettenglied, zweites
- 17: Kettenglied, drittes
- 18: Öffnung, schlitzförmig
- 18': Öffnung, schlitzförmig
- 19: Durchführöffnung
- 20: Kettenabschnitt
- 21: Aufnahmegabel
- 22: Anschlussbolzen
- 23: Kettenglied
- 24: Kettenglied
- 25: Bohrung
- 26: Bolzen
- 27: Sicherungsstift
- 28: Bohrung

- A: Pfeil
- B: Pfeil
- L: Länge
- s: Schwenkachse

## Patentansprüche

1. Verkürzungsklaue (6) für eine Zurrkette (1) mit einem Aufnahmeteil (7) und einem Halteteil (8), welcher Kettenglieder gegen ungewolltes Lösen von Kettengliedern (14, 16, 17) eines Kettenstranges (3) der Zurrkette aus dem Aufnahmeteil sichert,
wobei der Aufnahmeteil (7) gabelförmig ausgebildet ist und eine schlitzförmige Vertiefung (15) für ein erstes Kettenglied (14) des Kettenstranges (3) aufweist,
**dadurch gekennzeichnet, dass**
der Halteteil (8) zwischen einer Schließstellung und einer Offenstellung bezüglich des Aufnahmeteils verschwenkbar an dem Aufnahmeteil gelagert ist,
wobei der Halteteil (8) eine Gliedtasche (8g), die zum Halten eines zweiten, an das erste Kettenglied (14) anschließenden Kettengliedes in Schließstellung der Verkürzungsklaue ausgebildet ist,
und eine schlitzförmige Öffnung (18) zur Aufnahme eines an das zweite Kettenglied (16) anschließenden dritten Kettenglieds (17) bei geschlossener Verkürzungsklaue aufweist,
wobei der Halteteil (8) ausgebildet ist, in seiner Offenstellung den Kettenstrang (3) freizugeben und in seiner Schließstellung den Kettenstrang in der Verkürzungsklaue (6) zu fixieren.

2. Verkürzungsklaue (6) nach Anspruch 1, **dadurch gekennzeichnet, dass** der Aufnahmeteil (7) eine Abstützfläche (15b) aufweist, die zum Abstützen des ersten Kettenglieds (14) des Kettenstranges (3) bei geschlossener Verkürzungsklaue (6) ausgebildet ist.

3. Verkürzungsklaue (6) nach Anspruch 1 oder 2, **dadurch gekennzeichnet, dass** bei in seine Schließstellung verschwenktem Halteteil (8) das erste Kettenglied (14) zwischen Abstützfläche (15b) des Aufnahmeteils (7) und einem Ende des Halteteils (8) gelegen ist.

4. Verkürzungsklaue (6) nach Anspruch 2 oder 3, **dadurch gekennzeichnet, dass** die das erste Kettenglied (14) abstützende Abstützfläche (15b) am Boden der schlitzförmigen Vertiefung (15) des Aufnahmeteils (7) liegt.

5. Verkürzungsklaue (6) nach einem der Ansprüche 1 bis 4, **dadurch gekennzeichnet,**
**dass** an die schlitzförmige Öffnung (18) eine Durchführöffnung (19) für den Kettenstrang (3) anschließt.

6. Verkürzungsklaue (6) nach einem der Ansprüche 1 bis 4, **dadurch gekennzeichnet,**
**dass** die schlitzförmige Öffnung (18) einseitig offen ist, um ein Entfernen des in ihr aufgenommenen dritten Kettengliedes (17) bei Offenstellung des verschwenkbar gelagerten Halteteils (8) zu ermöglichen.

7. Verkürzungsklaue (6) nach einem der Ansprüche 1 bis 6, **dadurch gekennzeichnet,**
**dass** die Breite der schlitzförmigen Öffnung (18) entsprechend der Nenndicke (d) der Kettenglieder so bemessen ist, dass das dritte Kettenglied (17) mit Spiel aufgenommen wird.

8. Verkürzungsklaue (6) nach einem der Ansprüche 1 bis 7, **dadurch gekennzeichnet,**
**dass** an dem Halteteil (8) zwei Drehzapfen (9) ausgeformt sind, welchen in dem Aufnahmeteil (7) Lagerausnehmungen (10) zu ihrer Aufnahme zugeordnet sind.

9. Verkürzungsklaue (6) nach einem der Ansprüche 1 bis 8, **dadurch gekennzeichnet,**
**dass** der Aufnahmeteil (7) einstückig mit einer Schraubspindel (5) eines Ratschenspanners (4) ausgebildet ist.

10. Verkürzungsklaue (6) nach einem der Ansprüche 1 bis 6, **dadurch gekennzeichnet,**
**dass** der Aufnahmeteil (7') zum Anschließen eines Kettenabschnittes (20) als Anschlussteil eine Aufnahmegabel (21) mit einem Anschlussbolzen (22) besitzt.

11. Verkürzungsklaue (6) nach einem der Ansprüche 1 bis 8 oder 10 und nach Anspruch 9,
**dadurch gekennzeichnet, dass** an das erste Kettenglied (14) in Richtung der Schraubspindel (5) zwei weitere Kettenglieder (23, 24) anschließen, wobei das letzte Kettenglied (24) mit Hilfe eines in eine Bohrung (25) einsetzbaren Bolzens (26) in dem Aufnahmeteil (7) gehalten ist.

12. Verkürzungsklaue (6) nach einem der Ansprüche 1 bis 11, **dadurch gekennzeichnet,**
**dass** der Halteteil (8) um eine Schwenkachse (s) verschwenkbar ist, die durch Lagerelemente (9, 10) verläuft, die im gabelförmigen Aufnahmeteil (7) einander gegenüber liegen.

13. Ratschenspanner (4), bei welchem an zumindest einer seiner beiden Seiten eine Verkürzungsklaue (6) nach einem der Ansprüche 1 bis 11 vorgesehen ist.

## Claims

1. Shortening claw (6) for a lashing chain (1), comprising a receiving part (7) and a holding part (8), which secures chain links against unintentional release of chain links (14, 16, 17) of a chain strand (3) of the lashing chain from the receiving part,
wherein the receiving part (7) is fork-shaped and comprises a slot-shaped recess (15) for a first chain link (14) of the chain strand (3),
**characterized in that**
the holding part (8) is mounted on the receiving part pivotable between a closure position and an open position with respect to the receiving part,
wherein the holding part (8) comprises a link pocket (8g) configured to hold a second chain link adjoining the first chain link (14) in the closure position of the shortening claw
and a slot-shaped opening (18) configured to receive a third chain link (17) adjoining the second chain link (16) when the shortening claw is closed,
wherein the holding part (8) is configured to release the chain strand (3) in its open position and to fix the chain strand in the shortening claw (6) in its closure position.

2. Shortening claw (6) according to claim 1, **characterized in that** the receiving part (7) has a support surface (15b) configured to support the first chain link (14) of the chain strand (3) when the shortening claw (6) is closed.

3. Shortening claw (6) according to claim 1 or 2, **characterized in that**, when the holding part (8) is pivoted into its closure position, the first chain link (14) is located between the supporting surface (15b) of the receiving part (7) and one end of the holding part (8).

4. Shortening claw (6) according to claim 2 or 3, **characterized in that** the supporting surface (15b) supporting the first chain link (14) is at the bottom of the slot-shaped recess (15) of the receiving part (7).

5. Shortening claw (6) according to any one of claims 1 to 4, **characterized in that** the slot-shaped opening (18) is adjoining to a feed-through opening (19) for the chain strand (3).

6. Shortening claw (6) according to any one of claims 1 to 4, **characterized in that** the slot-shaped opening (18) is open on one side so as to enable removal of the third chain link (17) received therein when the pivotably mounted holding part (8) is in the open position.

7. Shortening claw (6) according to any one of claims 1 to 6, **characterized in that** the width of the slot-shaped opening (18) is dimensioned according to the nominal thickness (d) of the chain links such that the third chain link (17) is received with play.

8. Shortening claw (6) according to any one of claims 1 to 7, **characterized in that** on the holding part (8) two pivots (9) are realized, which are associated with bearing recesses (10) in the receiving part (7) for being received therein.

9. Shortening claw (6) according to any one of claims 1 to 8, **characterized in that** the receiving part (7) is formed in one piece with a screw spindle (5) of a ratchet tensioner (4).

10. Shortening claw (6) according to any one of claims 1 to 6, **characterized in that** the receiving part (7') has, as a connecting part for connecting a chain section (20) , a receiving fork (21) including a connecting bolt (22).

11. Shortening claw (6) according to any one of claims 1 to 8 or 10 and according to claim 9, **characterized in that** two further chain links (23, 24) are adjoining to the first chain link (14) in the direction of the screw spindle (5), the last chain link (24) being held within the receiving part (7) by means of a bolt (26) that is insertable into a bore (25).

12. Shortening claw (6) according to any one of claims 1 to 11, **characterized in that** the holding part (8) is pivotable about a pivot axis (s) extending through bearing elements (9, 10) located opposite each other within the fork-shaped receiving part (7).

13. Ratchet tensioner (4) being provided, on at least one of its two sides, with a shortening claw (6) according to any one of claims 1 to 11.

## Revendications

1. Griffe de raccourcissement (6) pour une chaîne d'amarrage (1) avec une partie de réception (7) et une partie de retenue (8), qui empêche des maillons de chaîne d'un brin de chaîne de se détacher involontairement de la partie de réception,
la partie de réception (7) étant réalisée en forme de fourche et présentant un renfoncement (15) en forme de fente pour un premier maillon de chaîne (14) du brin de chaîne (3),
**caractérisé en ce que**
la partie de retenue (8) est montée sur la partie de réception de manière à pouvoir pivoter entre une position de fermeture et une position ouverte par rapport à la partie de réception,
la partie de retenue (8) comportant une poche de maillon (8g) qui est conçue pour retenir un deuxième maillon de chaîne se raccordant au premier maillon de chaîne (14) en position de fermeture de la griffe de raccourcissement
et une ouverture en forme de fente (18) pour recevoir un troisième maillon de chaîne (17) se raccordant au deuxième maillon de chaîne (16) lorsque la griffe de raccourcissement est fermée, la partie de retenue (8) étant conçue pour libérer le brin de chaîne (3) dans sa position ouverte et pour fixer le brin de chaîne dans la griffe de raccourcissement (6) dans sa position de fermeture.

2. Griffe de raccourcissement (6) selon la revendication 1, **caractérisée en ce que** la partie de réception (7) comporte une surface d'appui (15b) qui est conçue pour soutenir le premier maillon de chaîne (14) du brin de chaîne (3) lorsque la griffe de raccourcissement (6) est fermée.

3. Griffe de raccourcissement (6) selon la revendication 1 ou 2, **caractérisée en ce que** lorsque la partie de retenue (8) est pivotée dans sa position de fermeture, le premier maillon de chaîne (14) est situé entre une/la surface d'appui (15b) de la partie de réception (7) et une extrémité de la partie de retenue (8).

4. Griffe de raccourcissement (6) selon la revendication 2 ou 3, **caractérisée en ce que** la surface d'appui (15b) soutenant le premier maillon de chaîne (14) se trouve au fond du creux en forme de fente (15) de la partie de réception (7).

5. Griffe de raccourcissement (6) selon l'une quelconque des revendications 1 à 4, **caractérisée en ce qu'**une ouverture de passage (19) pour le brin de chaîne (3) se raccorde à l'ouverture en forme de fente (18).

6. Griffe de raccourcissement (6) selon l'une quelconque des revendications 1 à 4, **caractérisée en ce que** l'ouverture en forme de fente (18) est ouverte d'un côté pour permettre un retrait du troisième maillon de chaîne (17) qu'elle reçoit lorsque la partie de retenue (8) montée pivotante est en position ouverte.

7. Griffe de raccourcissement (6) selon l'une quelconque des revendications 1 à 6, **caractérisée en ce que** la largeur de l'ouverture en forme de fente (18) est dimensionnée en fonction de l'épaisseur nominale (d) des maillons de chaîne de manière à ce que le troisième maillon de chaîne (17) soit reçu avec un certain jeu.

8. Griffe de raccourcissement (6) selon l'une quelconque des revendications 1 à 7, **caractérisée en ce que** deux tourillons (9) sont formés sur la partie de retenue (8), auxquels sont associés des évidements de palier (10) dans la partie de réception (7) pour leur réception.

9. Griffe de raccourcissement (6) selon l'une quelconque des revendications 1 à 8, **caractérisée en ce que** la partie de réception (7) est formée intégrale avec une broche filetée (5) d'un tendeur à cliquet (4).

10. Griffe de raccourcissement (6) selon l'une quelconque des revendications 1 à 6, **caractérisée en ce que** la partie de réception (7') a une fourche de réception (21) avec un boulon de raccordement (22) pour le raccordement d'un tronçon de chaîne (20) en tant que partie de raccordement.

11. Griffe de raccourcissement (6) selon l'une quelconque des revendications 1 à 8 ou 10 et selon la revendication 9, **caractérisée en ce que** deux autres maillons de chaîne (23, 24) se raccordent au premier maillon de chaîne (14) en direction de la broche filetée (5), le dernier maillon de chaîne (24) étant maintenu dans la partie de réception (7) à l'aide d'un boulon (26) pouvant être inséré dans un alésage (25).

12. Griffe de raccourcissement (6) selon l'une quelconque des revendications 1 à 11, **caractérisée en ce que** la partie de retenue (8) peut pivoter autour d'un axe de pivotement (s) qui passe par des éléments de palier (9, 10) qui se font face dans la partie de réception (7) en forme de fourche.

13. Tendeur à cliquet (4) dont au moins l'un des deux côtés est pourvu d'une griffe de raccourcissement (6) selon l'une quelconque des revendications 1 à 11.
